(19) Europäisches Patentamt
European Patent Office
Office européen des brevets

(11) Publication number: **0 021 736**
**B1**

(12) **EUROPEAN PATENT SPECIFICATION**

(45) Date of publication of patent specification: **04.12.85**

(21) Application number: **80301982.7**

(22) Date of filing: **12.06.80**

(51) Int. Cl.⁴: **C 01 B 3/40,** C 01 B 3/16, C 01 B 3/32, C 01 B 3/58, C 07 C 29/15, B 01 J 23/72, B 01 J 23/86, B 01 J 27/04

# (54) Catalytic process involving carbon monoxide and hydrogen.

(30) Priority: **27.06.79 GB 7922339**

(43) Date of publication of application:
**07.01.81 Bulletin 81/01**

(45) Publication of the grant of the patent:
**04.12.85 Bulletin 85/49**

(84) Designated Contracting States:
**BE DE FR GB IT NL**

(56) References cited:
**DE-A-2 813 329**
**FR-A-2 181 795**
**FR-A-2 226 357**
**FR-A-2 333 572**
**FR-A-2 390 377**
**GB-A- 792 827**
**GB-A-1 104 285**
**GB-A-1 113 376**
**GB-A-1 319 191**
**GB-A-1 445 121**
**GB-A-1 445 122**
**GB-A-1 492 929**
**GB-A-2 000 045**

(73) Proprietor: **IMPERIAL CHEMICAL INDUSTRIES PLC**
**Imperial Chemical House Millbank**
**London SW1P 3JF (GB)**

(72) Inventor: **Rankin, James Deans**
**Northcott 3 West Green**
**Heighington Darlington Co Durham (GB)**
Inventor: **Twigg, Martyn Vincent**
**30 Valley Drive**
**Yarm Cleveland (GB)**

(74) Representative: **Chapman, Kenneth Hazel et al**
**Imperial Chemical Industries PLC Legal Department: Patents Po Box 6 Bessemer Road**
**Welwyn Garden City Herts, AL71HD (GB)**

(56) References cited:
**GB-A-2 002 648**
**GB-A-2 013 517**
**US-A-2 815 331**
**US-A-3 231 520**
**US-A-3 271 326**
**US-A-4 083 799**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 021 736 B1

**Description**

This invention relates to a catalytic process for the production of hydrogen by gaseous phase reaction of a carbonaceous feedstock with steam or, where appropriate, carbon dioxide.

Catalysts for such a process have most commonly been supported on a refractory material such as alumina or hydraulic cement. In GB—A—1104285, GB—A—1113376, GB—A—1319191, GB—A—1445121 and US—A—4083799 it is proposed to use a metallic catalyst support, with active metal integral with or directly bonded to the support. These have not gained industrial acceptance and there has in effect been no alternative to refractory-support catalysts despite their drawbacks such as brittleness and generally complicated production methods.

It has been proposed, for example in GB—A—1471138, to use an oxide-coated alloy as support for metallic platinum as a catalyst for engine exhaust gas treatment. In GB—A—1492929 this type of catalyst is proposed for exhaust gas treatment and also for oxidation of ammonia to nitrogen oxides, oxidation of hydrocarbons or carbon monoxide or reduction of nitrogen oxides. In UK application 12934/77, published as German application DE—A—2813329, this type of catalyst is proposed for methanation of synthesis gas containing carbon monoxide, carbon dioxide and hydrogen. In GB—A—2002648 catalysts are described comprising an intermetallic compound of the general formula $A_xB_y$, where A represents one or more Group VIII metals having an atomic number not larger than 78, B represents one or more of the metals of the group consisting of Al, Sc, Y, the lanthanides, Ti, Zr, Hf, V, Nb and Ta and x and y are integers, which may be supported on a ceramic monolithic substrate and may include a refractory metal oxide layer between the compound and the substrate. Such catalysts are "three-way" catalysts for use in exhaust gas treatment. It is indicated that they may be used for a low temperature type of hydrocarbon steam reforming reaction and that an alloy substrate may be used instead of ceramic substrate.

According to the invention a gas containing hydrogen is produced by reacting in the gaseous phase a hydrocarbon or hydrocarbon derivative with steam and/or carbon dioxide, in the presence of a catalyst with a catalyst outlet temperature such that the product gas contains at least 30% v/v of hydrogen on a dry basis in which the catalyst comprises a support made of metal or alloy and at least one active metal selected from the class consisting of nickel, cobalt and the platinum group metals not present as an intermetallic compound of the general formula $A_xB_y$, where A represents one or more Group VIII metals having an atomic number not larger than 78, B represents one or more of the metals of the group consisting of Al, Sc, Y, the lanthanides, Ti, Zr, Hf, V, Nb and Ta and x and y are integers, characterised in that the metal or alloy support constitutes a primary support and carries, adhering to its surface, a layer of refractory oxidic material constituting a secondary support and containing the active metal.

In this specification the term "RTM" will be used to indicate the name of a product is proprietary and possibly registered in at least one of the countries in which applications are filed. Percentages are by weight unless otherwise indicated.

The reactions for which the catalyst is especially suitable are:

1. of a hydrocarbon

$$CH_4+H_2O \longrightarrow CO+3H_2$$

$$\text{"}CH_2\text{"}+H_2O \longrightarrow CO+2H_2$$

("$CH_2$" represents hydrocarbons higher than methane, for example normally gaseous hydrocarbons and normally liquid hydrocarbons boiling at up to 200°C). The analogous reactions with carbon dioxide

$$CH_4+CO_2 \longrightarrow 2CO+2H_2$$

$$\text{"}CH_2\text{"}+CO_2 \longrightarrow 2CO+H_2$$

can be carried out separately or with the steam reaction.

These reactions are strongly endothermic and can be carried out with external heating or else as a hybrid process in which oxygen is a reactant, so that heat evolved in oxidation is absorbed by the endothermic reactions. Commonly these reactions accompanied by the shift reaction.

$$CO+H_2O \longrightarrow CO_2+H_2;$$

If the starting hydrocarbon is "$CH_2$" and the temperature is relatively low, the methanation reaction may also occur, but the hydrogen containing gas with which the invention is concerned contains at least 30% v/v of hydrogen on a dry basis. Preferably it contains less than 30, especially less than 10% v/v of methane on a dry basis. For the production of hydrogen-containing synthesis gas, the catalyst preferably is active at temperatures in the range 350—600°C, but the outlet temperature is preferably at least 600°C to ensure low methane content. The range 750—900°C is of general application for making synthesis gas for ammonia or methanol production. As extremes, the support must withstand temperatures normally up to

950°C, but possibly up to 1100°C for the production of metallurgical reducing gas or, at the other extreme, to 700°C for the production of town gas. For the hybrid process using oxygen the temperature may be as high as 1300°C. It is however, within the invention to use a catalyst supported on a metal or alloy in lower-temperature regions of such processes and refractory ceramic catalysts in high temperature regions.

For these reactions the catalyst usually comprises metallic nickel and/or cobalt. The pressure is typically in the range 1—50 atm abs. but pressures up to 120 atm abs. are proposed.

2. Of a hydrocarbon derivative:

the most important reaction of methanol decomposition

$$CH_3OH \longrightarrow CO + 2H_2$$

$$CH_3OH + H_2O \longrightarrow CO_2 + 3H_2 \text{ (or analogously with } CO_2)$$

The reaction of ethanol or isobutyraldehyde with steam to produce a hydrogen-containing gas has been proposed for industrial operation. Usually the hydrocarbon derivative is an aliphatic alcohol, ether, ester or amine, since then there is little if any catalyst poisoning, and its boiling point is not over 200°C. The reaction may be accompanied by methanation of the carbon oxides and hydrogen, especially when a town gas or substitute natural gas is to be produced.

In general, owing to their possibly high geometric surface but low pressure drop, the catalysts are especially useful in reaction conditions in which the rate is limited by diffusion.

The metal or alloy primary catalyst support preferably is capable of forming an outer layer of water-soluble difficulty reducible oxide: "difficulty reducible" oxides include chromium and elements above chromium in the electromotive force series of the elements, a selection from which is set out on page 1521—3 of Handbook of Chemistry and Physics 32nd Edition.

Thus the primary supports that may be used can be for example titanium, zirconium and their alloys containing up to 10% other metals.

Preferably the primary support comprises iron and at least one other metal capable of forming an oxide layer effective to inhibit corrosion of iron. For processes at temperatures up to 750°C stainless steels, including ferritic steels, containing at least 12% of chromium (such as defined in ASTM specification 430) are generally suitable. For processes at up to 850°C it is preferred to use an austenitic stainless steel containing 16—20% of chromium, 6—10% of nickel and also minor constituents such as titanium or molybdenum, for example as defined in ASTM specifications 304, 316 and 321. For the generality of processes, including especially the steam hydrocarbon reaction at up to 1000°C, the preferred catalyst support is a high temperature alloy containing 20—30% of chromium, 15—40% of nickel, balance minor constituents and iron. Such alloys commonly have an austenitic structure. One example of such a preferred catalyst support is "alloy 800H", also known as INCOLOY (RTM) 800H and as UNS N-08810, as defined in ASTM specification 8407—77, the composition % of which is

| | |
|---|---|
| Ni | 30—35 |
| Cr | 19—23 |
| Fe | at least 39.5 (by difference) |
| Mn | not over 1.5 |
| C | 0.05—0.10 |
| Cu | not over 0.75 |
| Si | 1.0 |
| S | not over 0.015 |
| Al | 0.15—0.60 |
| Ti | 0.15—0.60 |

Another is alloy 800 (UNS N-08810), defined in the same specification, which may contain less carbon. Yet another is "INCOLOY DS" (RTM) which has the % composition 18 Cr, 37 Ni, 1.5—2.5 Si, not over 0.15 C.

If desired, an alloy of still higher nickel content, including those containing over 70% of Ni, balance minor constituents and chromium, such as NICHROME or INCONEL (RTMs) can be used, but for most purposes are considered too expensive.

Further alloys that can be used, but which show somewhat inferior mechanical strength in the most

severe conditions encountered in the process of the invention, are those containing 0.5 to 12% of aluminium and 0.01 to 3% of yttrium, and possibly up to 25% of chromium. These alloys include those developed for oxidative conditions at high temperature encountered in the nuclear power industry.

Examples of useful alloys are the following:

TABLE 1

| Aluminium | Chromium | Yttrium | Others | Iron |
|---|---|---|---|---|
| 0.5 to 12 | up to 20 | 0.1 to 3 | — | balance |
| 0.5 to 12 | 5 to 15 | 0.1 to 3 | — | balance |
| 4 to 6 | 5 to 15 | 0.1 to 3 | — | balance |
| 4 to 12 | 20 to 25 | 0.1 to 3 | — | balance |
| 4 to 5.5 | 20 to 25 | 0.1 to 0.5 | — | balance |
| 2 to 12 | 10 to 25 | 0.01 to 0.1 | — | balance |
| 4 to 5.5 | 15 to 22 | 0.01 to 0.1 | — | balance |
| 4.5 | 22.5 | — | 2.0 Co<br>0.1 C | balance |

The primary support alloy may contain, in substitution for part of the iron balance up to 5.0, for example up to 3.0% of nickel and/or cobalt. Although such nickel and/or cobalt may exert some catalytic effect, the nickel and/or cobalt specified in the definition of the invention is additional thereto.

Among the usable alloys are the steels available under the trade names FECRALLOY and KANTHAL (both RTM).

The presence of chromium, aluminium or silicon or more than one of these is believed to account for their property of bonding oxidic catalyst secondary support material, especially alumina, at their surface. In addition they are characterised by high creep strength and high resistance to oxidation and carburisation, both of which properties are very desirable in a material intended to withstand the conditions prevailing in the steam/hydrocarbon reaction.

It will be appreciated that, since a catalyst must have a relatively high geometric surface area and must thus be fabricated from metal or alloy of thin gauge, the alloys to be used are those within the above definitions that are available in wrought form.

It is also possible to use a metal or alloy that is not itself resistant to the reaction conditions but has been rendered resistant by a coating, for example of an oxide such as ceria. Suitable alloys are low chromium steels (up to 11% Cr), possibly containing molybdenum (0.5 to 1.5% w/w).

The catalyst can be in the form of a monolith, that is, a honeycomb filling the cross-section of the reactor in which it is to be used and providing gas flow channels in one or more parallel sets. This arrangement is mainly suitable for reactions in which heat is not added or withdrawn by indirect heat exchange, such as through the wall of a reactor. More conveniently the catalyst is in the form of units each of which is small compared with the dimensions of the catalyst bed to be charged therewith. (By "small" we mean having at least one dimension less than 0.25, especially less than 0.15, of the catalyst bed average width). Since the units can have an open structure they can, if desired, be of a size between "small" and sufficient to fill the cross-section. The units can be for example small honeycombs, which may suitably be of the same order of size, or rather larger, than random-pack oxidic catalyst pieces. A suitable unit has one dimension in the range 5—20 mm, with the largest dimension not less than 0.2 or more than 5 times the smallest. Suitably such units are made by spirally winding a corrugated or embossed strip of sheet or gauze. For this purpose windings of corrugated or embossed material can alternate with flat material or the corrugation or bosses can be spaced or angled to avoid nesting-together of successive corrugations. The thickness of the metal or alloy is suitably in the range 0.03 to 0.5 mm. A typical geometric surface to volume ratio is in the range 10 to 80, especially 20—50 $cm^{-1}$.

Alternative catalyst units are in wire or strip form fabricated into open three dimensional configuration, especially of the kind dimensioned to avoid contact between adjacent wires within the units. Examples of these are described more fully in UK published application GB—A—2000045.

If the catalyst is in honeycomb form it is composed preferably of perforated, e.g. expanded strip, with 0.2 to 2 mm apertures.

Whichever form the catalyst is in, the units can be brought together into assemblies, for example by

joining them together or enclosing them in cages. The assemblies can be supported separately within a reactor, and thus the weight carried by the lower layers of catalyst can be limited.

In regard to the active material of the catalyst, whereas the use of non-noble metals and their compounds has been emphasised, in a catalyst comprising nickel and/or cobalt there may also be present one or more platinum group metals, which are capable of increasing the activity of the nickel and/or cobalt and of decreasing the tendency to carbon lay-down when reacting steam with hydrocarbons higher than methane. Likewise palladium, alone or with copper can be used in the synthesis or decomposition of methanol. Further, the catalyst, especially in preferred forms, can contain a platinum group metal but no non-noble catalytic component. Such a catalyst is more suitable for the steam/hydrocarbon reaction than one containing a platinum group metal on the conventional oxidic support because a greater fraction of the active metal is accessible to the reacting gas.

The catalyst secondary support may consist of the oxide layer present on the surface of the primary support as the result of reaction with atmospheric oxygen or hot steam or of a deliberate oxidation treatment by an oxidising agent or electrolytic anodisation. Such an oxide layer tends to be thin and to have limited capacity for active metal, and accordingly it is preferred to have present at least one layer of refractory oxidic material externally applied. Preferably this is additional to the layer resulting from oxidation of primary support metal. It preferably does not bridge apertures in the primary support.

The externally applied layer or layers can comprise any oxidic material already known as a support for a catalyst for the reaction to be carried out. Typically it comprises alumina and this is especially preferred when the primary support alloy comprises chromium, silicon or aluminium, so that it carries an oxide layer due to superficial oxidation. Other sesquioxides, for example, chromia and rare earth oxides may make up at least part of the applied layer. Other useful secondary support oxides are titania, zirconia, hafnia, thoria, vanadia, urania and those of manganese, molybdenum and tungsten. A very suitable secondary support layer comprises such oxides applied in two ways, namely in highly dispersed colloidal form and in flocculated powder form. The oxides can be the same or different: in particular colloidal alumina can be present along with a different alumina or with one or more different oxides. The ratio of colloidal material to such other material is suitably in the range 0.05 to 5.0.

Preferably the secondary support includes a grain growth inhibitor, for example 0.1 to 3.0% of an oxide of a rare earth metal or mixture thereof, especially cerium or yttrium.

If alumina is present, it is preferably in one or more of the gamma, delta, theta and alpha forms.

When nickel and/or cobalt are present in the catalyst, it is expected that a sesquioxide layer will include, at least after a period of process operation, some nickel and/or cobalt spinel. It is within the invention to have the secondary support material at least partly in the form of spinel, whether of nickel and/or cobalt or of a divalent metal having a difficultly reducible oxide, especially magnesium or manganese or, less preferably, zinc. Some nickel and/or cobalt present as spinel is in a reduction-resistant oxidic form, it does not contribute significantly to the activity of the catalyst: active nickel and/or cobalt are additional thereto. Other useful secondary support oxides are titania, zirconia, hafnia and thoria.

The specific surface of the externally applied support is suitably in the range 0.5 to 250, especially 100—200 $m^2/g$.

The total content of catalytically available metal in the catalyst is suitably in the range 0.2 to 25.0%, especially 5 to 25%, calculated on the constituents non-volatile in air at 900°C of the catalyst precursor in which the catalytic metals are present as monoxides. The secondary support preferably constitutes 3 to 30% of the catalyst, calculated in the same way.

The specific surface of the catalytic metal is suitably in the range 0.1 to 50 $m^2/g$ of catalyst. Within these ranges the larger areas are preferred for reactions under 600°C.

The catalyst can be made by applying a compound of the active metal and the secondary support or a precursor thereof to the primary support. In a preferred method the secondary support is applied first and a solution containing a thermally decomposable compound of active material is applied thereafter. In order to obtain a large enough content of active material, several applications of such a solution, each followed by drying and thermal decomposition, may be made. Oxides of metals such as aluminium can be produced *in situ* by including powdered metal in the composition. If desired a compound of the active metal can be applied along with the secondary support. Other methods, such as deposition from the vapour phase can be used.

The preferred method of making the catalyst comprises forming a colloidal dispersion of support material, for example by acid-peptisation and preferably also de-ionisation, suspending further support material in the dispersion, applying the suspension to the metal or alloy support and calcining it to effect adhesion and adjust the surface area of the support material. Any grain growth inhibitor is preferably added with the dispersion or suspension. The suspension can be caused to gel before calcination.

Example 1

Processes using catalysts of low nickel content

Preparation of catalysts A and B

The primary catalyst support was FECRALLOY (RTM) steel having the following properties:

Chemical composition %
Fe 70.6
Cr 15.2
Al 4.8
Y 0.4
Catalyst units:
shape: helices of diameter 3 mm and height 5 mm
weight about 0.067 g
wire diameter 0.5 mm
space between turns of helix 0.5 to 1.0 mm
Catalyst bed properties:
bulk density about 1 g $ml^{-1}$
exposed surface about 11.9 $cm^2$
per ml of bed volume

Initially this support carried a very thin film of alumina as a result of heating in air. Catalyst precursors were made from this support by applying nickel nitrate/alumina sol compositions as follows.

TABLE 2

| | $NiO/(NiO+Al_2O_3)$ in sol % | NiO on catalyst % | $Al_2O_3$ on catalyst % |
|---|---|---|---|
| A | 15 | 0.49 | 3.25 |
| B | 30 | 0.87 | 2.90 |

The product is a catalyst precursor and requires reduction to produce active catalyst.

Test of catalyst B in hydrogen steam production by the methane reaction
One sample of catalyst B was reduced in these conditions:

Catalyst bed: 40 ml catalyst+520 ml 5.4×3.6 squat alumina cylinders
Temperature: 645°C
Pressure: 28 bar abs
Gas mixture % v/v $H_2$: 10
$H_2O$: 90
Time: 21 h
Total space velocity 50000 $h^{-1}$ volumes per volume of catalyst.

Then a 1:3 v/v methane-steam mixture was passed over it at the same pressure and a 400°C inlet temperature but various outlet temperatures and space velocities. The outlet gas was analysed after establishing steady operation in each set of conditions, then adjustment was effected to the next set of conditions. The percentage methane conversion is set out in Table 3.

TABLE 3

| Conditions (see below) | A | B | C | D | A | B |
|---|---|---|---|---|---|---|
| Hours after reduction | 2 | 23 | 26 | 47 | 50 | 71 |
| % methane conversion | 0.1 | 0.7 | 33.9 | 17.3 | 0.0 | 0.7 |

| Conditions | Outlet temp °C | Methane v/v space velocity |
|---|---|---|
| A | 600 | 8550 |
| B | 600 | 21375 |
| C | 750 | 8550 |
| D | 750 | 21375 |

It is evident that the catalyst has useful activity at an outlet temperature of 750°C.

Example 2

Hydrogen production using catalyst of higher nickel content

A FECRALLOY (RTM) steel support as described in Example 1 was dipped in a nickel nitrate solution containing 20 g Ni per 100 ml for 10 minutes, then drained, dried and calcined at 450°C for 8 hours. This operation was repeated and the resulting catalyst precursor contained 2.0% of NiO.

It was reduced and tested in the steam methane reaction as described above. The results are shown in Table 4.

TABLE 4

| | % Methane conversion | | | |
|---|---|---|---|---|
| Day | A | B | C | D |
| 0 | 13.2 | | | |
| 1 | | 9.4 | 43.1 | |
| 2 | 5.3 | | | 39.6 |
| 3 | | 3.8 | | |
| 4 | | | 46.4 | 41.1 |
| 7 | | | 52.5 | 41.1 |
| 8 | 1.4 | 1.3 | | 31.2 |
| 10 | | | | 38.2 |
| 11 | | | | 32.3 |
| 16 | | 0 | | 39.0 |

Conditions:

A inlet=400°C, exit=600°C, $CH_4$=342 $lh^{-1}$, $H_2O$=770 $mlh^{-1}$
B inlet=400°C, exit=600°C, $CH_4$=855 $lh^{-1}$, $H_2O$=1924 $mlh^{-1}$
C inlet=400°C, exit=750°C, $CH_4$=342 $lh^{-1}$, $H_2O$=770 $mlh^{-1}$
D inlet=400°C, exit=750°C, $CH_4$=855 $lh^{-1}$, $H_2O$=1924 $mlh^{-1}$

Example 3

Processes using catalyst of still higher nickel content

A catalyst precursor was made as in Example 2 but using a support having a heavier coating of alumina (14%) and thus a greater capacity for nickel. The NiO content was 14.0%.

This catalyst precursor was tested in hydrogen production by the steam/methane reaction as described in Example 1. The results were as shown in Table 5.

TABLE 5

| Conditions | A | B | C | D | A | B |
|---|---|---|---|---|---|---|
| Hours after reduction | 2 | 23 | 26 | 47 | 50 | 71 |
| % methane conversion | 15.2 | 5.8 | 58.4 | 50.8 | 14.9 | 7.1 |

Example 4

Hydrogen production by steam/methane reaction over catalyst in form of small honeycombs

(a) Fabrication of honeycomb catalyst support

For each honeycomb, expanded stainless steel strip (16.8% Cr, ASTM type 430) 17 mm wide, 0.125 mm thick, mesh openings 0.4—0.6 mm was cut into an 18 cm and a 23 cm length. The 23 cm length was corrugated with a wavelength of 2.8 mm and an amplitude of 1 mm by passing it between toothed rollers. The two strips were wound together and the resulting spiral honeycomb was bound together with NICHROME (RTM) wire. Its diameter was 20 mm and weight 3.7 g.

It was washed with acetone to remove grease, dried in air and calcined at 600°C for 6 hours in air to ensure formation of a layer containing chromium oxide.

(b) Application of alumina as secondary support

The alumina was derived from a dispersible alumina hydrate ("Cerasol"—RTM) having the following characteristics:

| | | |
|---|---|---|
| Composition % | $Al_2O_3$ | 65 |
| | $H_2O$ | 35 |
| | $Na_2O$ | 0.02 |
| | $SiO_2$ | 0.01 |
| | $Fe_2O_3$ | 0.02 |
| Crystallite size | about 70 Angstrom units | |
| Crystal structure | böhmite | |
| Helium density | 2.78 g $ml^{-1}$ | |
| Hg density | 1.56 g $ml^{-1}$ | |
| pore volume | 0.28 ml $g^{-1}$ | |

Alumina hydrate (600 g) was added to dilute nitric acid (2200 ml of 0.14 M acid) and stirred vigorously for 4 hours at room temperature. The resulting sol was deionised by dialysis through the walls of a cellulose acetate container surrounded by deionised water. To a 150 ml sample of deionised sol was added 300 g of the same alumina. This was followed by 10 ml of non-ionic wetting agent and 2.25 g cerium nitrate in 10 ml of water, and then water was stirred in to bring the total volume to 1.2 litres, corresponding to about 30% of $Al_2O_3$.

This suspension was circulated through a batch of honeycombs for 45 minutes. The honeycombs were allowed to drain, dried at room temperature overnight and calcined at 700°C for 1 hour. The coated honeycombs then carried 4.2% of alumina. To obtain a thicker coating this operation was repeated, giving 7.9% of alumina, calculated on alloy. The alumina was of gamma and eta type, with crystallite size about 60 Angstrom units, surface area 180 $m^2/g$, mercury density 1.53 g $ml^{-2}$.

(c) Production of catalyst precursor

A sample of alumina-coated honeycombs was immersed for 20 minutes in a nickel nitrate solution containing 20 g of nickel (as metal) per 100 ml. They were allowed to drain for 30 minutes, dried for 4 hours at 105—120°C and calcined at 450°C for 6 hours. This procedure was repeated. The resulting precursor contained 14.2% nickel oxide NiO and 6.3% of $Al_2O_3$.

(d) Steam/methane reaction: initial activity

A 500 ml charge (45 honeycombs) was placed in a 250 mm long 50 mm internal diameter tube equipped for external electric heating. A preheated (400°C) mixture of desulphurised natural gas (vol % 91 $CH_4$, 3.5 $C_2H_6$, 2$N_2$) and steam (ratio 1:3) was passed through the charge at a volume space velocity of 2000 $h^{-1}$, atmospheric pressure. The catalyst temperature was adjusted to successive levels between 350 and 754°C. Although the catalyst precursor was not reduced before feeding methane and steam to it, its activity developed rapidly and resulted in raw hydrogen streams whose contents of unreacted methane are shown in Table 6. (The remainder of the gas is hydrogen, carbon oxides and nitrogen).

TABLE 6
Activity of fresh catalyst

| Temperature °C | $CH_4$, % v/v |
|---|---|
| 350 | 67.9 |
| 373 | 53.7 |
| 390 | 51.9 |
| 408 | 43.1 |
| 430 | 38.7 |
| 453 | 36.6 |
| 501 | 25.4 |
| 556 | 14.3 |
| 576 | 7.3 |
| 620 | 3.7 |
| 660 | 2.9 |
| 686 | 2.9 |
| 715 | 2.9 |
| 728 | 2.9 |
| 754 | 2.9 |

(e) Steam/methane reaction:duration of catalyst activity

The following further operations were carried out using the same charge of catalyst:
13 hours run at 730°C;
2 hours steaming at 730°C, space velocity 1500 $h^{-1}$;
activity test at temperatures in the range 411—745°C;
18 hours run at 730°C at halved space velocity;
activity test at temperatures in the range 368—775°C;
16 hours treatment with steam (3 volumes) and nitrogen (1 volume) at 730°C, space velocity 2000 $h^{-1}$;
activity test at temperatures in the range 385—728°C.
The content of methane in the hydrogen streams obtained in the final activity test are shown in Table 7.

TABLE 7
Activity of catalyst after extended operation

| Temperature °C | $CH_4$ % v/v |
|---|---|
| 385 | 72.9 |
| 428 | 50.2 |
| 442 | 47.7 |
| 456 | 43.0 |
| 510 | 24.2 |
| 539 | 17.3 |
| 580 | 10.1 |
| 725 | 2.9 |
| 728 | 2.9 |

It is evident that the catalyst has lost some activity, especially at the lower end of the temperature range, but the loss is not serious at the higher end, which represents the temperatures in industrial use in hydrogen production. The catalyst was in excellent mechanical condition, with substantially no loss of coating and no distortion of shape.

Example 5
Hydrogen production by steam/methane reaction over catalyst containing other oxides as secondary support

The catalyst preparation of Example 4 was repeated using the same metal honeycomb support, a dialysed alumina sol containing 20% of alumina, and coating mixtures having the following constituents:

5A 950 ml sol, 390 g alumina trihydrate ("BACO FRF 80");
5B 1000 ml sol, 300 g titania (BTP pigment anatase);
5C 1000 ml sol, 300 g zirconia powder (BA-chemicals "s-grade");
5D 1000 ml sol, 300 g alpha alumina powder ("Universal Grade 12").

Each mixture also contained 1.5 g of cerium nitrate and 5 ml of non-ionic wetting agent.

The catalyst was tested as described in paragraph (d) of Example 4. The contents of support oxide and nickel oxide in the catalyst precursor before test are shown in Table 8. The percentages of methane in the raw hydrogen streams produced are shown in Table 9, in comparison with the calculated percentages at equilibrium.

TABLE 8

| Catalyst | Support oxide % | NiO % |
|---|---|---|
| 5A | 9.8 | 17.5 |
| 5B | 10.1 | 17.4 |
| 5C | 29.0 | 14.4 |
| 5D | 13.0 | 17.6 |

TABLE 9
Methane contents of raw hydrogen streams

| Temperature °C \ Catalyst | 5A | 5B | 5C | 5D | Equilibrium |
|---|---|---|---|---|---|
| 550 | 15.8 | 16.3 | 15.0 | 18.5 | 12.3 |
| 600 | 9.3 | 9.2 | 10.2 | 11.9 | 6.0 |
| 650 | 5.1 | 4.7 | 5.9 | 7.5 | 2.2 |
| 700 | 2.8 | 2.8 | 3.1 | 4.8 | 0.7 |
| 750 | 1.8 | 2.2 | 3.0 | 2.4 | 0.2 |
| 760 | 1.6 | 2.0 | 2.8 | 2.2 | 0.1 |

It is evident that the catalysts have useful activity. The coatings adhered excellently to the alloy support.

Example 6
Hydrogen production by steam/methane reaction over catalyst supported on chromium nickel stainless steel

The honeycomb catalyst support fabrication described in paragraph (a) of Example 4 was repeated using ASTM 304 stainless steel having the following % composition:
Fe 69.6, Cr 18.3, Ni 9.3, Cu 0.2, Mo 0.4, Co 0.06, V 0.05
The resulting honeycombs were coated twice with a mixture as follows:
1.9 l dialysed alumina sol ("Cerasol", 30% $Al_2O_3$)
300 g powdered "Cerasol" (RTM) alumina hydrate
2.25 g cerium nitrate
10 ml non-ionic wetting agent.
After each coating the honeycombs were drained, dried overnight and calcined at 700°C for 1 hour. The coated honeycombs were twice immersed in nickel nitrate solution, dried and calcined, as described in Example 4, paragraph (c). The resulting catalyst precursor contained 6.6% of alumina and 16.8% of NiO.

It was tested in the steam/methane reaction as described in Example 4 paragraph (d). Table 10 shows the methane content of the raw product hydrogen streams, in comparison with calculated equilibrium values.

TABLE 10
Methane contents of raw hydrogen streams

| Temperature °C | Methane content % v/v | |
|---|---|---|
| | This catalyst | Equilibrium |
| 500 | 21.6 | 20.8 |
| 550 | 14.4 | 12.3 |
| 600 | 7.6 | 6.0 |
| 650 | 4.9 | 2.2 |
| 700 | 3.2 | 0.7 |
| 725 | 2.7 | 0.5 |
| 750 | 2.2 | 0.2 |
| 760 | 1.8 | 0.2 |

Example 7

Hydrogen production by steam/methane reaction over catalyst supported on chromium-aluminium-yttrium steel

The honeycomb catalyst support fabrication described in paragraph (a) of Example 4 was repeated using two unperforated strips of FECRALLOY (RTM) steel, one flat 25 cm long and one corrugated and 22 cm long after corrugation, each 0.002 inch (0.051 mm) in thickness. These were smaller overall than the Example 4 support, such that 70 honeycombs occupied 500 ml.

As a result of the heat treatment it carried a thin coating of alumina. Further alumina was applied from aqueous suspension, followed by two impregnations with nickel nitrate solution, as described in Example 4, paragraph (c). The resulting catalyst precursor contained 10.3% of $Al_2O_3$ and 20.4% of NiO.

The precursor was tested as described in Example 4, paragraph (d), then steamed at 750°C for 16 hours and re-tested, then cooled under nitrogen, re-heated and re-tested. Table 11 shows the methane contents of the resulting raw hydrogen streams, in comparison with the equilibrium values.

TABLE 11

Methane contents of raw hydrogen streams

| Temperature °C | Methane % v/v | | | |
|---|---|---|---|---|
| | initial | after steaming | after nitrogen | equilibrium |
| 400 | 46.6 | 56.7 | 62.1 | 44.5 |
| 450 | — | 38.1 | 30.3 | 31.6 |
| 500 | 21.4 | — | 17.9 | 20.8 |
| 550 | 8.2 | 17.9 | 11.9 | 12.3 |
| 600 | 2.5 | 7.8 | 6.9 | 6.0 |
| 650 | 1.1 | 2.9 | 7.9 | 2.0 |
| 700 | 0.7 | 2.2 | 1.1 | 0.7 |
| 750 | 0.5 | 0.5 | 0.5 | 0.2 |
| 760 | 0.4 | 0.4 | 0.5 | — |

Example 8

Use of high temperature alloy as catalyst support

Sheets 0.015 inch (0.8 mm) thick of roughened flat unperforated INCOLOY 800H (RTM) steel were coated with a dispersion of 27 g böhmite (average particle size 2.5 microns) and 0.2 g mixed rare earth oxides (50% $CeO_2$) in 100 ml water, drained, dried and calcined at 1000°C for 6 hours. By X-ray diffraction the coating was shown to consist of delta and theta alumina. This operation was then repeated using a coating mixture made by dispersing 10 g of pseudoböhmite in 100 ml of 0.2% nitric acid and suspending 100 g of the böhmite therein. The total content of alumina was 2.8%. The major alumina phase present was alpha.

The coated support was impregnated twice the nickel nitrate solution, each time followed by calcination to nickel oxide. The total NiO content was 1.4%. (Since the alloy thickness was approximately double what would be used in practice, the $Al_2O_3$ and NiO contents appear to be low).

The resulting catalyst precursor was tested in the steam/methane reaction at 30 atm abs pressure, with various runs at 568—657°C outlet temperature, 2.2—3.8 volumes steam per volume of methane. After 216 hours there was no loss of coating and no distortion of the catalyst. The catalyst was at least as active as conventional ceramic-supported catalyst.

**Claims**

1. A process for producing a gas containing hydrogen which comprises reacting in the gaseous phase a hydrocarbon or hydrocarbon derivative with steam and/or carbon dioxide, in the presence of a catalyst with a catalyst outlet temperature such that the product gas contains at least 30% v/v of hydrogen on a dry basis, in which the catalyst comprises a support made of metal or alloy and at least one active metal selected from the class consisting of nickel, cobalt and the platinum group metals not present as an intermetallic compound of the general formula $A_xB_y$, where A represents one or more Group VIII metals having an

atomic number not larger than 78, B represents one or more of the metals of the group consisting of Al, Sc, Y, the lanthanides, Ti, Zr, Hf, V, Nb and Ta and x and y are integers, characterised in that the metal or alloy support constitutes a primary support and carries, adhering to its surface, a layer of refractory oxidic material constituting a secondary support and containing the active metal.

2. A process according to claim 1 in which adhesion of the secondary support layer to the primary support is by way of an oxide layer formed on the primary support by oxidation of primary support metal.

3. A process according to claim 1 or claim 2 in which the secondary support layer comprises refractory oxide applied partly in highly dispersed colloidal form and partly in flocculated powder form.

4. A process according to any one of the preceding claims in which the secondary support has a surface area in the range 100—200 $m^2g^{-1}$.

5. A process according to any one of the preceding claims in which the secondary support contains a grain growth inhibitor.

6. A process according to claim 5 in which the secondary support comprises alumina with 0.1 to 3.0% of an oxide of yttrium or of a rare earth metal.

7. A process according to claim 6 in which the rare earth metal is cerium.

8. A process according to any one of the preceding claims in which the catalyst is in the form of small honeycombs having one dimension in the range 5—20 mm, with the largest dimension not more than 5 times the smallest and made by spirally winding a corrugated or embossed strip of sheet or gauze.

9. A process according to any one of the preceding claims in which the catalyst has a geometric surface in the range 10—80 $cm^{-1}$.

10. A process according to any one of the preceding claims in which the primary support comprises an iron alloy resistant to the conditions in which the reaction is carried out and containing 20—30% of chromium, 15—40% of nickel, balance minor constituents and iron.

11. A process according to claim 10 in which the alloy is selected from the group consisting of alloy 800 H and alloy 800 as defined in ASTM specification 8407—77 and an alloy having the percentage composition 18 chromium, 37 nickel, 1.5 to 2.5 silicon, not over 0.15 carbon, balance iron.

12. A process according to any one of claims 1 to 9 in which the primary support comprises an iron alloy resistant to the conditions in which the reaction is carried out and containing 0.5—12% of aluminium and 0.01 to 3% of yttrium, but not more than 5% of nickel or cobalt.

**Patentansprüche**

1. Verfahren zur Herstellung eines wasserstoffhaltigen Gases, bei dem ein Kohlenwasserstoff oder ein Kohlenwasserstoffderivat in der Gasphase in Gegenwart eines Katalysators mit Dampf und/oder Kohlendioxid umgesetzt wird, und zwar mit einer darartigen Katalysator-Auslaßtemperatur, daß das gasförmige Produkt mindestens 30% (Vol./Vol.; Bezugsbasis trockenes Produkt) Wasserstoff enthält, wobei der Katalysator einen aus Metall oder einer Legierung hergestellten Träger und mindestens ein aktives Metall, das aus der aus Nickel, Cobalt und den Platinmetallen bestehenden Gruppe ausgewählt ist und nicht als intermetallische Verbindung der allgemeinen Formel $A_xB_y$ vorliegt, worin A ein oder mehr als ein Metall der Gruppe VIII mit einer Ordnungszahl, die nicht größer als 78 ist, bedeutet, B ein oder mehr als ein Metall der aus Al, Sc, V, den Lanthanoiden, Ti, Zr, Hf, V, Nb und Ta bestehenden Gruppe bedeutet und x und y ganze Zahlen sind, enthält, dadurch gekennzeichnet, daß der aus Metall oder einer Legierung hergestellte Träger einen Primärträger darstellt und eine an seiner Oberfläche anhaftende Schicht aus feuerfestem oxidischem Material trägt, die einen Sekundärträger darstellt und das aktive Metall enthält.

2. Verfahren nach Anspruch 1, bei dem die Sekundärträgerschicht mittels einer Oxidschicht, die durch Oxidation von Primärträgermetall auf dem Primärträger gebildet worden ist, an dem Primärträger anhaftet.

3. Verfahren nach Anspruch 1 oder 2, bei dem die Sekundärträgerschicht aus feuerfestem Oxid besteht, das teilweise in hochdisperser kolloidaler Form und teilweise in Form von ausgeflocktem Pulver aufgebracht worden ist.

4. Verfahren nach einem der vorhergehenden Ansprüche, bei dem der Sekundärträger eine spezifische Oberfläche von 100 bis 200 $m^2g^{-1}$ hat.

5. Verfahren nach einem der vorhergehenden Ansprüche, bei dem der Sekundärträger einen Kornwachstumshemmstoff enthält.

6. Verfahren nach Anspruch 5, bei dem der Sekundärträger Aluminiumoxid mit 0,1 bis 3,0% eines Oxids von Yttrium oder einem Seltenerdmetall enthält.

7. Verfahren nach Anspruch 6, bei dem das Seltenerdmetall Cer ist.

8. Verfahren nach einem der vorhergehenden Ansprüche, bei dem der Katalysator in Form von kleinen Waben vorliegt, die eine Abmessung in dem Bereich von 5 bis 20 mm haben, wobei die größte Abmessung nicht mehr als das 5fache der kleinsten Abmessung beträgt, und durch spiralförmiges Wickeln eines gewellten oder geprägten Streifens aus Folie oder Gaze bzw. Siebgewebe hergestellt werden.

9. Verfahren nach einem der vorhergehenden Ansprüche, bei dem der Katalysator ein geometrisches Oberfläche/Volumen-Verhältnis von 10 bis 80 $cm^{-1}$ zeigt.

10. Verfahren nach einem der vorhergehenden Ansprüche, bei dem der Primärträger aus einer Eisenlegierung besteht, die gegen die Bedingungen, unter denen die Umsetzung durchgeführt wird,

beständig ist und 20 bis 30% Chrom, 15 bis 40% Nickel und als Rest geringfügigere bzw. Nebenbestandteile und Eisen enthält.

11. Verfahren nach Anspruch 10, bei dem die Legierung aus der Gruppe ausgewählt wird, die aus Legierung 800 H und Legierung 800, wie sie in der ASTM-Spezifikation 8407—77 definiert sind, und einer Legierung mit der Zusammensetzung: 18% Chrom, 37% Nickel, 1,5 bis 2,5% Silicium, nicht mehr als 0,15% Kohlenstoff, Rest Eisen besteht.

12. Verfahren nach einem der Ansprüche 1 bis 9, bei dem der Primärträger aus einer Eisenlegierung besteht, die gegen die Bedingungen, unter denen die Umsetzung durchgeführt wird, beständig ist und 0,5 bis 12% Aluminium und 0,01 bis 3% Yttrium, jedoch nicht mehr als 5% Nickel oder Cobalt, enthält.

**Revendications**

1. Procédé de production d'un gaz contenant de l'hydrogène, qui comprend la réaction en phase gazeuse d'un hydrocarbure ou un dérivé d'hydrocarbure avec de la vapeur et/ou du dioxyde de carbone en présence d'un catalyseur, avec une température de sortie du catalyseur telle que le gaz produit contienne au moins 30% en v/v d'hydrogène en produit sec, dans lequel le catalyseur comprend un support en métal ou en alliage et au moins un métal actif choisi dans la classe comprenant du nickel, du cobalt et les métaux du groupe du platine qui ne sont pas présents en tant que composé intermétallique de formule générale $A_xB_y$, où A représente un ou plusieurs métaux du groupe VIII ayant un nombre atomique ne dépassant pas 78, B représente un ou plusieurs des métaux du groupe comprenant Al, Sc, Y, les lanthanides, Ti, Zr, Hf, V, Nb et Ta, et x et y sont des entiers, caractérisé en ce que le support en métal ou alliage constitue un support primaire et porte, adhérant à sa surface, une couche d'un matériau de type oxyde réfractaire constituant un support secondaire et contenant le métal actif.

2. Procédé suivant la revendication 1, caractérisé en ce que l'adhérence de la couche de support secondaire au support primaire est assurée au moyen d'une couche d'oxyde formée sur le support primaire par oxydation du métal du support primaire.

3. Procédé suivant la revendication 1 ou la revendication 2, caractérisé en ce que la couche de support secondaire comprend un oxyde réfractaire appliqué en partie sous forme colloïdale fortement dispersée et en partie sous forme pulvérulente floculée.

4. Procédé suivant l'une quelconque des revendications précédentes, caractérisé en ce que le support secondaire a une aire superficielle dans la gamme de 100—200 $m^2\ g^{-1}$.

5. Procédé suivant l'une quelconque des revendications précédentes, caractérisé en ce que le support secondaire contient un inhibiteur de la croissance du grain.

6. Procédé suivant la revendication 5, caractérisé en ce que le support secondaire comprend de l'alumine avec 0,1 à 3,0% d'un oxyde d'yttrium ou d'un métal de terre rare.

7. Procédé suivant la revendication 6, caractérisé en ce que le métal de terre rare est le cérium.

8. Procédé suivant l'une quelconque des revendications précédentes, caractérisé en ce que le catalyseur est sous la forme de petits nids d'abeilles ayant une dimension dans la gamme de 5 à 20 mm, dont la plus grande dimension n'est pas supérieure à cinq fois la plus petite, et préparés par enroulement en spirale d'une bande ondulée ou bosselée de feuille ou de gaze.

9. Procédé suivant l'une quelconque des revendications précédentes, caractérisé en ce que le catalyseur a une surface géométrique dans la gamme de 10 à 80 $cm^{-1}$.

10. Procédé suivant l'une quelconque des revendications précédentes, caractérisé en ce que le support primaire comprend un alliage de fer résistant aux conditions dans lesquelles est réalisée la réaction, et contenant 20 à 30% de chrome, 15 à 40% de nickel, le restant étant constitué par des constituants mineurs et du fer.

11. Procédé suivant la revendication 10, caractérisé en ce que l'alliage est choisi dans le groupe comprenant l'alliage 800 H et l'alliage 800 tels que définis dans la Spécification ASTM 8407—77 et un alliage ayant la composition suivante: 18% de chrome, 37% de nickel, 1,5 à 2,5% de silicium, pas plus de 0,15% de carbone, les reste étant du fer.

12. Procédé suivant l'une quelconque des revendications 1 à 9, caractérisé en ce que le support primaire comprend un alliage du fer résistant aux conditions dans lesquelles est effectuée la réaction et contenant 0,5 à 12% d'aluminium et 0,01 à 3% d'yttrium, mais pas plus de 5% de nickel ou de cobalt.